# EUROPEAN PATENT APPLICATION

(11) **EP 2 150 020 A1**
(43) Date of publication of application: **03.02.2010**
(21) Application number: 08290816.1
(22) Date of filing: 28.07.2008
(51) Int. Cl.: H04L 29/06

(54) **Method for communicating, a related system for communicating and a related transforming part**

(71) Applicant: Alcatel Lucent, 75008 Paris (FR)
(72) Inventor: Lou, Zhe, 2000 Antwerp (BE); Trappeniers, Lieven, 2200 Herentals (Noorderwijk) (BE); Godon, Marc Bruno Frieda, 1840 Londerzeel (BE)
(74) Representative: Narmon, Gisèle Marie Thérèse

(57) **Abstract**

The present invention relates to a method, a related system device and related transforming part for communicating a first multimedia communications signal from a first communication device to at least one further communications device over a communications network. This method first comprises the steps of the first communications device sending the first multimedia communications signal to at least one further communications device wherein the communications network comprises a network element and where the method for multimedia communications further comprises the steps of the network element transforming at least part of the first multimedia communications signal into a non verbal communications signal and subsequently the network element sending the non verbal communications signal to at least one of the first communications device and the further communication devices in addition to said first multimedia communications signal.

## Description

The present invention relates to a method for communicating according to the preamble of claim 1 and a system for communicating according to the preamble of claim 5.

Such a subject is already known in the art, e.g. from "*US PATENT* US 2004/0189484 *"COMMUNICATING APPARATUS FOR DEMONSTRATING A NON AUDIO MESSAGE BY DECODED VIBRATIONS*"*.* Therein, a communications device is described that, possibly in addition to handling audio communication, is capable of encoding non audio messages into a vibration signal.

A first user can use an information interface of the communications device, such as sensors or a touch-panel to generate some simple, basic expressions such as text data that could be encoded into a vibration signal in such way that the user can identify the non audio messages by tactile sense.

Disadvantageously, the users of the communications device themselves need to generate the non-verbal communication via the information interface of the communications device, by, for example, selecting it from a menu, typing a text on the keyboard of the communications device, and is there no link between a potential verbal communication, the multimedia communication signal and the additional non-verbal communication, i.e. the encoding of non-verbal signal to vibration signal.

Hence, the nonverbal communication is in addition, and fully independent, to a potential first verbal communication, and is therefore not optimally supporting this first verbal communication.

An object of the present invention is to provide a method for communicating of the above known type but wherein a first communication is better supported by an additional second communication signal.

According to the invention, this object is achieved by the method for communicating according to claim 1, the system for communicating according to claim 5, the transforming part according to claim 7 and the transforming network element according to claim 11.

Indeed, by transforming at least part of the first multimedia communications signal into a non verbal communications signal the generated non verbal communication signal is based on the first multimedia communications signal and therefore is tailored to the first multimedia communications signal. Hence the generated non-verbal communications signal is optimum supporting the first multimedia communication when forwarding the generated non verbal communications signal in addition to the first multimedia communications system towards at least one of the first communications device and the further communication devices in addition to said first multimedia communications signal.

A further characterizing embodiment of the present invention is described in claim 2 and claim 8.

The transforming at least part of said first multimedia communications signal into said non-verbal communications signal is based on at least one predetermined non-verbal signal where for each part of said first multimedia communications signal a predetermined non-verbal signal may be defined.

At detection of a first multimedia communications signal or part thereof, a corresponding predetermined non-verbal signal is determined and subsequently, this first multimedia communications signal or part thereof may be transformed into a corresponding predetermined non-verbal signal.

Another characterizing embodiment of the present invention is described in claim 3 and claim 9.

The transforming of the at least part of the first multimedia communications signal into said non-verbal communications signal is based on preferences of a user.

Additionally there may be a user profile defined for a user and in case there is in the set that comprises at least one first multimedia communications signal, with a plurality corresponding non-verbal communications signals associated to each of the first multimedia communications signals then the user profile is used for determining a non-verbal communications signal from the plurality of non-verbal communications signals that are defined for a single first multimedia communications signal. Subsequently, this first multimedia communications signal or part thereof may be transformed into the determined corresponding non-verbal communications signal.

Still a further characterizing embodiment of the present invention is described in claim 4 and claim 10.

The transforming of at least part of the first multimedia communications signal into said non-verbal communications signal is based on capabilities of the communication devices. In the step of transforming first multimedia communications signal into said non-verbal communications signal, the capabilities of the communication devices are detected and additionally based on the detected capabilities of one or more communication devices, the non-verbal communications signal is generated.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents an implementation of a communications system according to the present invention.
Fig. 2 represents functional representation of a network element including a transformation part according to the present invention.

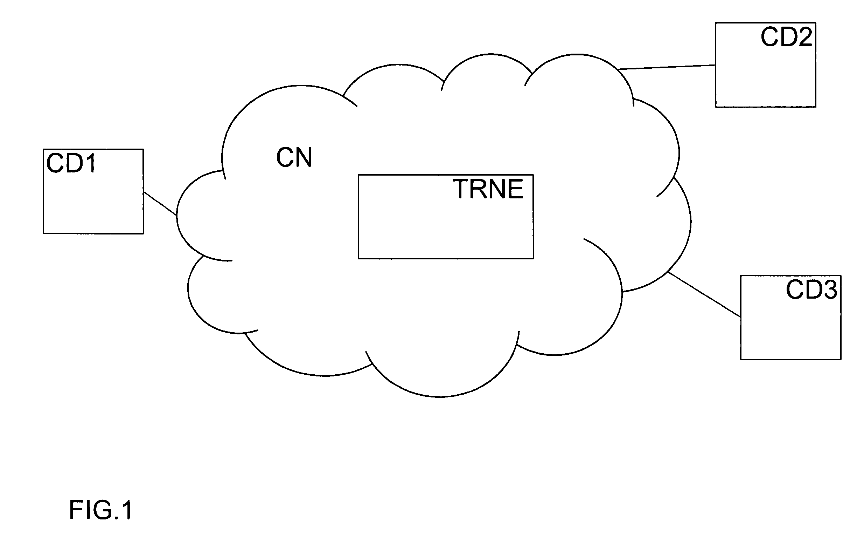

In the following paragraphs, referring to the drawing in FIG.1, an implementation of the communications system is described. In the second paragraph, all connections between mentioned elements are defined.

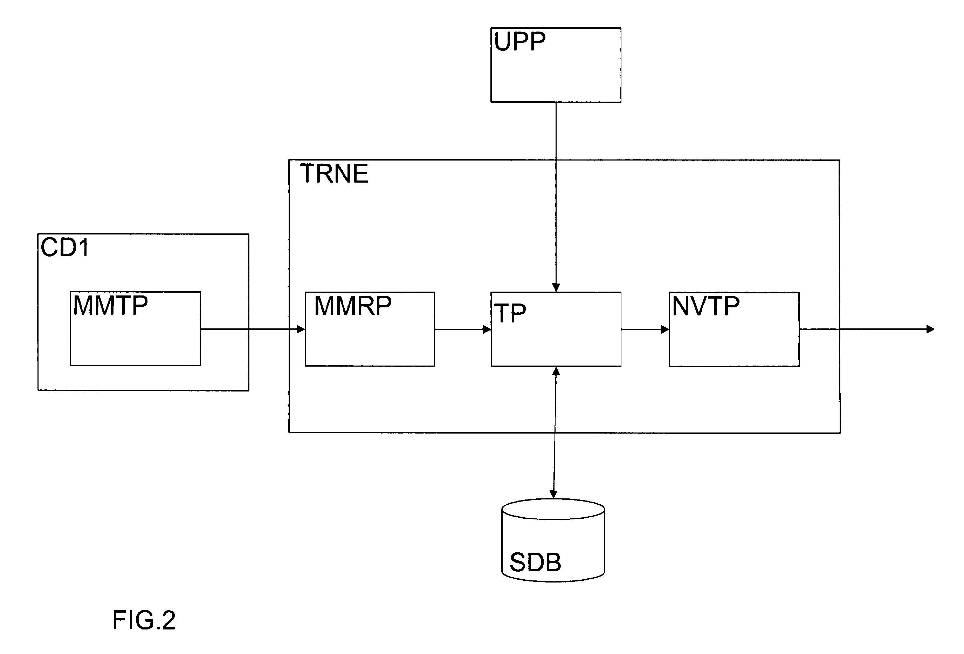

Subsequently all relevant functional means of the mentioned system as presented in FIG.2 are described followed by a description of all interconnections. In the succeeding paragraph the actual execution of the product searching system is described.

The communications system of the present invention includes a first communication device CD1 and at least one further communications device CD2, CD3 for communicating with each other. Such communication devices may be any mobile or fixed communication terminal having multimedia capabilities, but also any mobile and fixed communications devices having audio-visual means, like speaker and a display possibly in combination with any vibrating signal generating means.

The system further comprises a communications network CN like a mobile or fixed telephone communications network, a Voice over IP network or GSM or CDMA or 3G network. This communications network may also include a network element that incorporates the transformation functionality for transforming at least part of a first multimedia communications signal, originating from a communications device CD1, into a non verbal communications signal.

The Communications network couples all communications devices CD1, CD2, CD3 and the network element TRNE over a wireless connection.

Further, the first communications device CD1 comprises a multimedia communications signal transmitting part MMTP, for transmitting the multimedia signal like audio, video, SMS, MMS or any other multimedia signal to the transforming network element TRNE.

The transforming network element TRNE has a multimedia reception part MMRP that is able to receive the multimedia signal sent by the first communications device CD1, a transforming part TP that is adapted to transform at least part of the first multimedia communications signal into a non verbal communications signal and a nonverbal signal transmitting part NVTP that is adapted to send the non verbal communications signal to at least one of the first communications device CD1 and the further communication devices CD2, CD3 in addition to the first multimedia communications signal.

Additionally there may be a user preferences holding part UPP that is adapted to hold, collect and update a user profile for a user of the communications system like the user corresponding to communications device CD1. This user profile may be used for determining the kind of transformation of the first multimedia communications signal into the non-verbal communications signal.

Furthermore, there additionally may be a database that is adapted to hold at least non-verbal signal from which the transformation signal can select a non-verbal signal or combination of non-verbal signals based on at least part of the incoming first multimedia communications signal.

Such a first multimedia communications signal may be an audio signal, a video signal, an SMS, an MMS or any other multimedia signal.

Such a non-verbal communications signal may be include sequences and related non-verbal elements such as vibration, animation, light flashing.

Additionally the Transforming part may include means for detecting capabilities of one or more communication devices based whereupon non-verbal communications signal is generated (not shown in any of figures).

The multimedia transmitting part MMTP has an output-terminal that is also an output-terminal of the communications device CD1. The output-terminal of the communications device CD1 is coupled to an input-terminal of the transforming network element TRNE. The input-terminal of the transforming network element TRNE is at the same time an input-terminal of the multimedia-signal reception part MMRP. The multimedia signal reception part MMRP further is coupled with an output-terminal to an input-terminal of the transforming part TP that in turn is coupled with an output-terminal to an input-terminal of the non verbal signal transmission part NVTP. The non verbal signal transmission part NVTP has an output-terminal that is at the same time an output of the Transforming Network element TRNE. The output of the non verbal transmission part NVTP further is coupled to any of the further communication devices CD2, CD3. Additionally the Transforming part TP has an input-terminal that is coupled to an output-terminal of the user preferences holding part UPP and the transforming part TP is coupled with an input/output terminal to an input/output terminal of the signal database SDB.

In order to explain the execution of the present invention it is supposed that a first user with his mobile phone CD1 calls a second user on his fixed or mobile phone CD2 and a connection over the mobile network is established between both mobile phones and a communications session is started. Both users start discussing a certain subject and hence speech is sent through the network from the first communication device CD1 to the second communications device CD2.

Alternatively, any audio-, video-signal or a combination thereof may be sent from the first communications device CD1 to the second communications device CD2.

Additionally, even a third communications device CD3 or still further communications device may be involved in the previously mentioned communications session.

This multimedia signal is received by the multimedia receiving part included in the transforming network element TRNE, and forwarded to the transforming part TP, that transforms at least part of said first multimedia communications signal into a non verbal communications signal.

The transformation may be done based on the recognition of a word, sound or combination thereof and an associated nonverbal signal stored in the signal database SDB. The recognition may be based upon a voice recognition system wherein Automatic Voice Recognition in the INVTS extracts words from the conversation. For example: the first user is telling about a visit to the Zoo, you mention a LION. Automatically, the two phones start vibrating as a lion-sound and an animation of a lion is shown on both phones as a voice-recognition system recognizes the word "lion" and looks this word up in a table contained in the signal data base SDB and finds an entry for a roaring lion-sound vibration and roaring lion animation.

The non verbal signal transmission part NVTP then transmits the roaring lion-sound vibration and roaring lion animation to the first communication device CD1 and to the second communications device CD2 and possibly also to any further communications device involved in the communications session.

The transmission of the non verbal signal including the roaring lion-sound vibration and roaring lion animation to the first communication device CD1, the second communications device CD2 and possibly any further communications device CD3 is done in addition to the first multimedia communications signal, speech in this case, that is transmitted from the first communications device CD1 to the second communications device CD2 and possibly any further communication device CD3.

A further example is that a user at a first communications device CD1 tells a joke to the other user(s) at a second or even further communications device CD2, CD3, the speech is transmitted via the multimedia transmission part at the first communications device CD1 and the multimedia reception part at the transforming network element TRNE towards the transforming part TP.

The joke is so funny that the second user at second communication device CD2 starts to laugh, "Ha, Ha...", which is in fact a trained and pre-defined signal, in the signal database SDB, that is configured to be transformed into a vibration and a flash with a dancing girl by the transforming part TP of the transforming network element TRNE and then being shown on both mobile screen. It is funny and you like it and in this way the original joke telling is supported with non verbal signals.

Additionally the transforming part TP deals with the transforming of at least part of said first multimedia communications signal into said non-verbal communications signal is based on preferences of a user.

For instance, in the "joke" example mentioned above, the first user with communication device CD1 prefers not to receive vibration signals during audio communication. The first user's profile is configured accordingly. Therefore the first user will only receive a flash with a dancing girl without any vibration when the second user at the second communication device CD2 starts to laugh.

Additionally the transforming part TP deals with the transforming of at least part of said first multimedia communications signal into said non-verbal communications signal is based on capabilities of said communication devices CD1, CD2, CD3).

The transforming part TP of the transforming network element TRNE automatically detects the mobile communication devices' capabilities and transforms the sender information into a corresponding means that can be accepted.

Again taking the example of the "joke". It turns out that the first user's communication device CD1 is not capable of display flash content. Therefore, when the second user starts to laugh, the TRNE only sends the vibration signal back to the first user's communication device CD1.

It is to be noted that although the transforming part functionality is disclosed within the communications network, i.e. within the network element of the communications network, the meant transforming part functionality alternatively may be provided/located outside the communications network, within some network management function or even at user's premises or locally within a communications device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

**1.** Method for communicating a first multimedia communications signal from a first communication device (CD1) to at least one further communications device (CD2, CD3) over a communications network (CN), said method comprising the steps of:
a. sending said first multimedia communications signal to at least one further communications device (CD2, CD3) by said first communications device (CD1), **CHARACTERISED IN THAT** said method for multimedia communications further comprises the steps of:
b. transforming at least part of said first multimedia communications signal into a non verbal communications signal;
c. sending said non verbal communications signal to at least one of said first communications device (CD1) and said further communication devices (CD2, CD3) in addition to said first multimedia communications signal.

**2.** Method for communicating according to claim 1, **CHARACTERISED IN THAT** said step of transforming said at least part of said first multimedia communications signal into said non-verbal communications signal is based on at least one predetermined non-verbal signal.

**3.** Method for communicating according to claim 1 or 2, **CHARACTERISED IN THAT** said step of transforming said at least part of said first multimedia communications signal into said non-verbal communications signal is based on preferences of a user.

**4.** Method for communicating according any claim 1 to 3, **CHARACTERISED IN THAT** said step of transforming said at least part of said first multimedia communications signal into said non-verbal communications signal is based on capabilities of said communication devices (CD1, CD2, CD3).

**5.** Communications system, for communicating a first multimedia communications signal from a first communication device (CD1) to at least one further communications device (CD2, CD3) over a communications network (CN), said system comprising:
a. a first multimedia communications signal transmitting part (MMTP) in said first communications device (CD1), adapted to send said first multimedia communications signal to at least one further communications device (CD2, CD3), **CHARACTERISED IN THAT** said communications network (CN) comprises a network element (NE) and **in that** said communications system further comprises:
b. a transforming part (TP), adapted to transform at least part of said first multimedia communications signal into a non verbal communications signal; and
c. a nonverbal signal transmitting part (NVTP) adapted to send said non verbal communications signal to at least one of said first communications device (CD1) and said further communication devices (CD2, CD3) in addition to said first multimedia communications signal.

**7.** Transforming part (TP), for use in a Communications system, for communicating a first multimedia communications signal from a first communication device (CD1) to at least one further communications device (CD2, CD3) over a communications network (CN), **CHARACTERISED IN THAT** said transforming part (TP) is adapted to transform at least part of said first multimedia communications signal into a non verbal communications signal, said non-verbal communications signal for being sent in addition to said first multimedia communications signal to at least one of said first communications device (CD1) and said further communication devices (CD2, CD3).

**8.** Transforming part (TP) according to claim 7 **CHARACTERISED IN THAT** said transforming part is further adapted to transform said at least part of said first multimedia communications signal into said non-verbal communications signal is based on at least one predetermined non-verbal signal.

**9.** Transforming part (TP) according to claim 7 **CHARACTERISED IN THAT** said transforming part is further adapted to transform said at least part of said first multimedia communications signal into said non-verbal communications signal based on preferences of a user.

**10.** Transforming part (TP) according to any of claims 7 to 9, **CHARACTERISED IN THAT** said transforming part is further adapted to transform said at least part of said first multimedia communications signal into said non-verbal communications signal is based on capabilities of said communication devices (CD1, CD2, CD3).

**11.** Network Element, **CHARACTERISED IN THAT** said network element includes a Transforming part (TP) according to claim 7.
